# EUROPEAN PATENT APPLICATION

(11) **EP 4 836 004 A1**
(43) Date of publication of application: **04.11.2026**
(21) Application number: 24912329.0
(22) Date of filing: 10.12.2024
(51) Int. Cl.: H01M 4/525, H01M 4/36, H01M 4/505

(54) **POSITIVE ELECTRODE ACTIVE MATERIAL FOR NON-AQUEOUS ELECTROLYTE SECONDARY BATTERY, METHOD FOR MANUFACTURING POSITIVE ELECTRODE ACTIVE MATERIAL, AND NON-AQUEOUS ELECTROLYTE SECONDARY BATTERY**

(30) Priority: 27.12.2023 JP 2023221598
(71) Applicant: Panasonic Intellectual Property Management Co., Ltd., Kadoma-shi, Osaka 571-0057 (JP)
(72) Inventor: MASUMOTO, Kaisei, Kadoma-shi, Osaka 571-0057 (JP); INOUE, Katsuya, Kadoma-shi, Osaka 571-0057 (JP); OGASAWARA, Takeshi, Kadoma-shi, Osaka 571-0057 (JP)
(74) Representative: Novagraaf International SA
(86) International application number: PCT/JP2024/043491
(87) International publication number: WO 2025/142440

(57) **Abstract**

In the present invention, a positive electrode active material for a non-aqueous electrolyte secondary battery comprises: first lithium transition metal composite oxide particles in which the molar ratio of Ni to the total molar amount of elements excluding Li and O is 50 mol% or greater, D50 is greater than 8 µm but not greater than 30 µm, and (D90-D10)/D50 is 0.7-1.5; and second lithium transition metal composite oxide particles in which the molar ratio of Ni to the total molar amount of elements excluding Li and O is 50 mol% or greater, D50 is greater than 1 µm but not greater than 6 µm, and D90-D10 is 6 µm or less. The first and/or second lithium transition metal composite oxide particles include(s) at least one element selected from the group consisting of Ca, Sr, B, Ti, and Nb.

## Description

### TECHNICAL FIELD

The present disclosure relates to a positive electrode active material for a non-aqueous electrolyte secondary battery, a method for manufacturing a positive electrode active material, and a non-aqueous electrolyte secondary battery using the positive electrode active material.

### BACKGROUND ART

In non-aqueous electrolyte secondary batteries such as lithium-ion secondary batteries, since a positive electrode active material significantly affects battery performance such as input-output characteristics, a capacity, cycle characteristics, and thermal stability, many investigations have been made on the positive electrode active material. For the positive electrode active material, a lithium-transition metal composite oxide including a transition metal element such as Ni, Co, and Mn is commonly used. A type and an addition amount of the element contained in the lithium-transition metal composite oxide, crystal structure of the composite oxide, and the like significantly affect the battery performance, and slight change in these physical properties may fail to achieve target performance.

For example, Patent Literature 1 and 2 propose a positive electrode active material for a non-aqueous electrolyte secondary battery including two types of lithium-transition metal composite oxides having different particle size distribution for a purpose of mainly increasing capacity of the battery.

### CITATION LIST

### PATENT LITERATURE

PATENT LITERATURE 1: Japanese Unexamined Patent Application Publication No. 2021-120937
PATENT LITERATURE 2: Japanese Patent No. 6273581

### SUMMARY

The non-aqueous electrolyte secondary battery such as the lithium-ion secondary battery has been required to have a higher capacity and high safety, and it is desired that abnormality such as heat generation do not occur even when the battery is placed under a high-temperature environment. An object of the present disclosure is to provide a positive electrode active material that can achieve a non-aqueous electrolyte secondary battery having excellent thermal stability. Note that the positive electrode active material disclosed in the Patent Literature still has large room for improvement about the thermal stability of the battery.

A positive electrode active material for a non-aqueous electrolyte secondary battery according to the present disclosure comprises: first lithium-transition metal composite oxide particles, wherein a mole ratio of Ni relative to a total amount of moles of elements other than Li and O is greater than or equal to 50 mol%, a volume-based particle diameter at 50%, D50, is greater than 8 µm and less than or equal to 30 µm, and (a volume-based particle diameter at 90%, D90, - a volume-based particle diameter at 10%, D10)/D50 is greater than or equal to 0.7 and less than or equal to 1.5; and second lithium-transition metal composite oxide particles, wherein a mole ratio of Ni relative to a total amount of moles of elements other than Li and O is greater than or equal to 50 mol%, D50 is greater than 1 µm and less than or equal to 6 µm, and D90-D10 is less than or equal to 6 µm, wherein at least one of the first and second lithium-transition metal composite oxide particles includes at least one selected from the group consisting of Ca, Sr, B, Ti, and Nb.

A method for manufacturing a positive electrode active material for a non-aqueous electrolyte secondary battery according to the present disclosure includes: a step of preparing first lithium-transition metal composite oxide particles, wherein a mole ratio of Ni relative to a total amount of moles of elements other than Li and O is greater than or equal to 50 mol%, a volume-based particle diameter at 50%, D50, is greater than 8 µm and less than or equal to 30 µm, and (a volume-based particle diameter at 90%, D90, - a volume-based particle diameter at 10%, D10)/D50 is greater than or equal to 0.7 and less than or equal to 1.5; a step of preparing second lithium-transition metal composite oxide particles, wherein a mole ratio of Ni relative to a total amount of moles of elements other than Li and O is greater than or equal to 50 mol%, D50 is greater than 1 µm and less than or equal to 6 µm, and D90-D10 is less than or equal to 6 µm; and a step of mixing the first and second lithium-transition metal composite oxide particles.

A non-aqueous electrolyte secondary battery according to the present disclosure comprises: a positive electrode including the above positive electrode active material; a negative electrode; and a non-aqueous electrolyte.

The positive electrode active material according to the present disclosure may achieve the non-aqueous electrolyte secondary battery having excellent thermal stability.

### BRIEF DESCRIPTION OF DRAWING

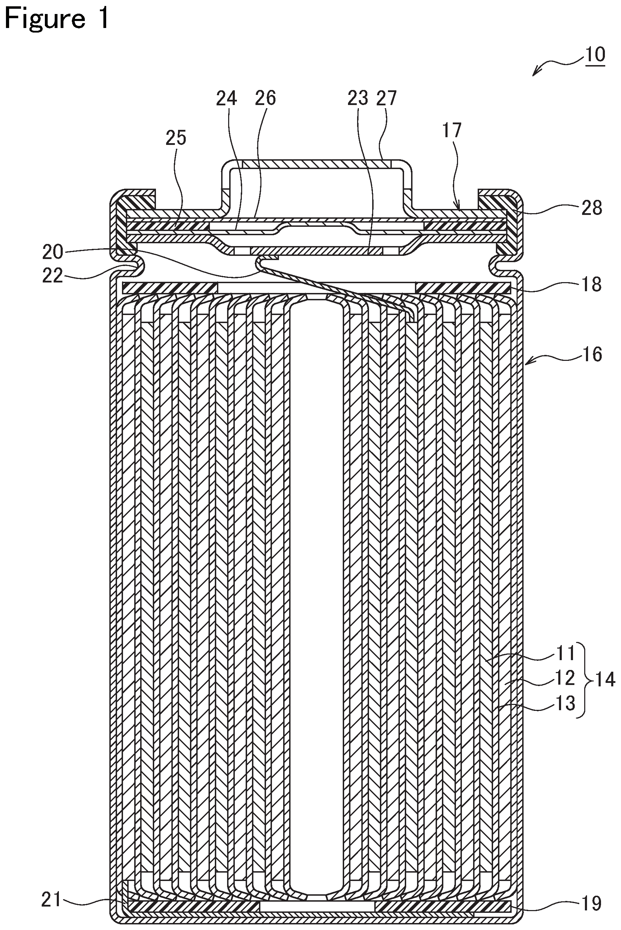

FIG. 1 is a vertical sectional view of a non-aqueous electrolyte secondary battery of an example of an embodiment.

### DESCRIPTION OF EMBODIMENTS

The present inventors have made intensive investigation to improve thermal stability of the non-aqueous electrolyte secondary battery, and consequently found that a thermal runaway temperature of a battery placed under a high-temperature environment is specifically raised by using the first and second lithium-transition metal composite oxide particles having the above specific composition and particle size distribution as a positive electrode active material. Although a detail mechanism to exhibit this effect is unclear, the findings that the particle size distribution of the positive electrode active material having the specific composition remarkably contributes to the thermal stability of the battery is extremely important in further improving performance of the non-aqueous electrolyte secondary battery.

Hereinafter, an example of embodiments of a positive electrode active material for a non-aqueous electrolyte secondary battery according to the present disclosure and a non-aqueous electrolyte secondary battery using this positive electrode active material will be described in detail with reference to the drawing. The scope of the present disclosure includes constitutions composed of selective combinations of constitutional elements of a plurality of embodiments and modified examples described below.

In embodiments described below, a non-aqueous electrolyte secondary battery 10, which is a cylindrical battery in which a wound electrode assembly 14 is housed in a bottomed cylindrical housing can 16, will be exemplified, but the housing body of the battery is not limited to the cylindrical housing can. Examples of other embodiments of the non-aqueous electrolyte secondary battery according to the present disclosure include a rectangular battery comprising a rectangular housing can, a coin battery comprising a coin-shaped housing can, and a pouch battery comprising a housing body constituted of laminated sheets including a metal layer and a resin layer. The electrode assembly is not limited to a wound electrode assembly, and may be a stacked electrode assembly in which a plurality of positive electrodes and a plurality of negative electrodes are alternately stacked via a separator.

FIG. 1 is a sectional view of the non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the housing can 16 housing the electrode assembly 14 and the non-aqueous electrolyte. The non-aqueous electrolyte secondary battery 10 is a lithium-ion secondary battery, for example. The electrode assembly 14 has a positive electrode 11, a negative electrode 12, and a separator 13, and has a wound structure in which the positive electrode 11 and the negative electrode 12 are spirally wound via the separator 13. The housing can 16 is a bottomed cylindrical metallic container having an opening portion on one end side in an axial direction, and the opening portion of the housing can 16 is capped with a sealing assembly 17. Hereinafter, for convenience of description, the sealing assembly 17 side of the battery will be described as the upper side, and the bottom side of the housing can 16 will be described as the lower side.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a long direction (a longitudinal direction) and a width direction (a short direction). The separators 13 are formed to have dimensions larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to an inner surface of bottom of the housing can 16 by welding or the like, and the housing can 16 becomes a negative electrode terminal.

A gasket 28 is provided between the housing can 16 and the sealing assembly 17 to achieve sealability inside the battery. On the housing can 16, a grooved portion 22 in which a part of a side surface portion thereof projects inward to support the sealing assembly 17 is formed. The grooved portion 22 is preferably formed in a circular shape along a circumferential direction of the housing can 16, and supports the sealing assembly 17 with the upper face thereof. The sealing assembly 17 is fixed on the upper portion of the housing can 16 with the grooved portion 22 and with an opening end portion of the housing can 16 crimped to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central portion thereof, and the insulating member 25 is interposed between the circumferential portion. If the internal pressure of the battery increases due to abnormal heat generation, the lower vent member 24 is deformed so as to push the upper vent member 26 up toward the cap 27 side and breaks, thereby cutting off a current pathway between the lower vent member 24 and the upper vent member 26. If the internal pressure further increases, the upper vent member 26 breaks, and gas is discharged through an opening portion of the cap 27.

Hereinafter, the positive electrode 11, the negative electrode 12, the separator 13, and the non-aqueous electrolyte, which constitute the non-aqueous electrolyte secondary battery 10, specifically a positive electrode active material that constitutes the positive electrode 11, will be described in detail.

### [Positive Electrode]

The positive electrode 11 has a positive electrode core and a positive electrode mixture layer disposed on the positive electrode core. For the positive electrode core, a foil of a metal stable within a potential range of the positive electrode 11, such as aluminum, an aluminum alloy, stainless steel, and titanium, a film in which such a metal is disposed on a surface layer thereof, and the like may be used. The positive electrode mixture layer includes a positive electrode active material, a conductive agent, and a binder, and is preferably provided on both surfaces of the positive electrode core. The positive electrode 11 may be produced by, for example, applying a positive electrode mixture slurry including the positive electrode active material, the conductive agent, and the binder on the positive electrode core, and drying and subsequently compressing the coating film to form the positive electrode mixture layer on both the surfaces of the positive electrode core.

Examples of the conductive agent included in the positive electrode mixture layer may include carbon black such as acetylene black and Ketjenblack, graphite, carbon nanotube (CNT), carbon nanofiber, graphene, metal fiber, metal powder, and conductive whisker. The conductive agents may be used singly, or a plurality of types thereof may be used in combination. A content of the conductive agent is not particularly limited, and is greater than or equal to 0.1 mass% and less than or equal to 5 mass% relative to the mass of the positive electrode mixture layer, for example.

Examples of the binder included in the positive electrode mixture layer may include fluorine-containing resins such as polytetrafluoroethylene (PTFE) and polyvinylidene fluoride (PVDF), olefin resins such as polyethylene, polypropylene, ethylene-propylene-isoprene copolymer, and ethylene-propylene-butadiene copolymer, polyacrylonitrile (PAN), a polyimide, a polyamide, and acrylic resins such as ethylene-acrylic acid copolymer. These resins may be used in combination with carboxymethylcellulose (CMC) or a salt thereof, polyethylene oxide (PEO), and the like. The binder may be used singly, or a plurality of types thereof may be used in combination. A content of the binder is not particularly limited, and is greater than or equal to 0.1 mass% and less than or equal to 5 mass% relative to the mass of the positive electrode mixture layer, for example.

The positive electrode active material includes: first lithium-transition metal composite oxide particles being large particles (hereinafter, which may be referred to as "first composite oxide particles"); and second lithium-transition metal composite oxide particles being small particles (hereinafter, which may be referred to as "second composite oxide particles"). The first and second composite oxide particles are lithium-nickel composite oxide particles having a mole ratio of Ni relative to a total amount of moles of elements other than Li and O of greater than or equal to 50 mol%, and at least one of the particles includes at least one selected from the group consisting of Ca, Sr, B, Ti, and Nb (hereinafter, these elements may be collectively referred to as "element M").

Although a detail will be described later, the first composite oxide particles have a volume-based particle diameter at 50% (D50) of greater than 8 µm and less than or equal to 30 µm. The second composite oxide particles have D50 of greater than 1 µm and less than or equal to 6 µm. Further, in the first composite oxide particles, (a volume-based particle diameter at 90% (D90) - a volume-based particle diameter at 10% (D10))/D50 is greater than or equal to 0.7 and less than or equal to 1.5, and in the second composite oxide particles, D90-D10 is less than or equal to 6 µm. The composite oxide particles may be particles including many internal pores, but preferably have solid structure with low internal porosity from the viewpoints of increasing energy density of the battery and the like.

The first and second composite oxide particles preferably include at least one selected from the group consisting of Co, Mn, and Al as an element other than Li, Ni, and the element M. Among these, Co and Mn are preferably included. The positive electrode active material preferably includes substantially only the first and second composite oxide particles, but may include third composite oxide particles other than the above two types or another compound within a range not impairing the object of the present disclosure. The third composite oxide particles may be, for example, a composite oxide not including Ni.

The first and second composite oxide particles may have substantially the same composition, for example, or may have compositions different from each other within a range satisfying the above composition. A content of the element to constitute the composite oxide may be measured by an inductively coupled plasma atomic emission spectrometer (ICP-AES), an electron probe micro analyzer (EPMA), an energy dispersive X-ray analyzer (EDX), or the like.

The first and second composite oxide particles have a layered rock-salt structure, for example. Examples of the layered rock-salt structure include a layered rock-salt structure belonging to the space group R-3m and a layered rock-salt structure belonging to the space group C2/m. Among these, the layered rock-salt structure belonging to the space group R-3m is preferable from the viewpoint of increase in capacity and stability of the crystal structure.

A mixing ratio between the first and second composite oxide particles is not limited, and the content of the first composite oxide particles is preferably equal to the content of the second composite oxide particles or larger than the content of the second composite oxide particles. In this case, for example, increase in capacity, increase in durability, and the like may be achieved while retaining excellent thermal stability of the battery. Although the positive electrode active material may include composite oxide particles other than the first and second composite oxide particles as noted above, the contents of the first and second composite oxide particles are preferably greater than or equal to 90 mass%, and may be substantially 100 mass% of the total mass of the positive electrode active material.

A preferable example of the content of the first composite oxide particles is greater than or equal to 50 mass% and less than or equal to 95 mass%, or greater than or equal to 60 mass% and less than or equal to 90 mass%, or greater than or equal to 65 mass% and less than or equal to 85 mass%, or greater than or equal to 70 mass% and less than or equal to 80 mass% of the total mass of the positive electrode active material. A preferable example of the content of the second composite oxide particles is greater than or equal to 5 mass% and less than or equal to 50 mass%, or greater than or equal to 10 mass% and less than or equal to 40 mass%, or greater than or equal to 15 mass% and less than or equal to 35 mass%, or greater than or equal to 20 mass% and less than or equal to 30 mass% of the total mass of the positive electrode active material.

In the first and second composite oxide particles, a mole ratio (a) of Ni relative to a total amount of moles of elements other than Li and O is preferably greater than or equal to 75 mol% from the viewpoints of increase in capacity of the battery and the like. The mole ratio (a) of Ni in the first composite oxide particles and the mole ratio (a) of Ni in the second composite oxide particles may be equal to or different from each other. Note that, when the mole ratios (a) of Ni are different from each other, the mole ratio (a) of Ni in the first composite oxide particles is preferably higher than the mole ratio (a) of Ni in the second composite oxide particles. In this case, the effect of improving the thermal stability of the battery becomes more remarkable.

The mole ratio (a) of Ni in the first composite oxide particles is more preferably greater than or equal to 75 mol% and less than or equal to 99 mol%, particularly preferably greater than or equal to 80 mol% and less than or equal to 95 mol%, and may be greater than or equal to 85 mol% and less than or equal to 95 mol%. The mole ratio (a) of Ni in the second composite oxide particles is more preferably greater than or equal to 75 mol% and less than or equal to 95 mol%, particularly preferably greater than or equal to 75 mol% and less than or equal to 90 mol%, and may be greater than or equal to 75 mol% and less than or equal to 85 mol%. The mole ratio (a) of Ni in each composite oxide particles within this range easily achieves both high capacity and thermal stability.

When the first composite oxide particles include Co and Mn, a mole ratio (b) of Co and a mole ratio (c) of Mn relative to the total amount of moles of elements other than Li and O are, for example, each greater than or equal to 1 mol% and less than or equal to 20 mol%, or greater than or equal to 2 mol% and less than or equal to 15 mol%, or greater than or equal to 3 mol% and less than or equal to 10 mol%, or greater than or equal to 4 mol% and less than or equal to 6 mol%. When the second composite oxide particles include Co and Mn, a mole ratio (b) of Co and a mole ratio (c) of Mn relative to the total amount of moles of elements other than Li and O are, for example, each greater than or equal to 2 mol% and less than or equal to 30 mol%, or greater than or equal to 3 mol% and less than or equal to 25 mol%, or greater than or equal to 5 mol% and less than or equal to 20 mol%, or greater than or equal to 7 mol% and less than or equal to 15 mol%.

At least one of the first and second composite oxide particles includes the element M as noted above. When the composite oxide particles include at least Ni and the element M, and have the specific particle size distribution, the thermal stability of the battery is specifically improved. Although the element M is effective even at an extremely small amount, a lower limit of a mole ratio (d) of the element M relative to the total amount of moles of elements other than Li and O is preferably 0.01 mol%, more preferably 0.03 mol%, and particularly preferably 0.05 mol%. An upper limit of the mole ratio (d) of the element M is, for example, preferably 1.5 mol%, more preferably 1 mol%, and particularly preferably 0.7 mol%. Even when the element M is added at greater than 1.5 mol%, for example, the effect of improving the thermal stability is limitative, and defects such as rise in resistivity and decrease in charge capacity may be caused.

An example of a preferable range of the mole ratio (d) of the element M is greater than or equal to 0.01 mol% and less than or equal to 1.5 mol%, or greater than or equal to 0.01 mol% and less than or equal to 1 mol%, or greater than or equal to 0.01 mol% and less than or equal to 0.7 mol%, or greater than or equal to 0.03 mol% and less than or equal to 1.5 mol%, or greater than or equal to 0.03 mol% and less than or equal to 1 mol%, or greater than or equal to 0.03 mol% and less than or equal to 0.7 mol%, or greater than or equal to 0.05 mol% and less than or equal to 1.5 mol%, or greater than or equal to 0.05 mol% and less than or equal to 1 mol%, or greater than or equal to 0.05 mol% and less than or equal to 0.7 mol%. When the composite oxide particles include a plurality types of the element M, a sum of mole ratios thereof is preferably within this range.

The preferable mole ratio (d) varies to some extent depending on the type of the element M. When the composite oxide particles include Ca, the preferable mole ratio of Ca relative to the total amount of moles of elements other than Li and O is, for example, greater than or equal to 0.1 mol% and less than or equal to 0.5 mol%, or greater than or equal to 0.15 mol% and less than or equal to 0.35 mol%. When the composite oxide particles include Sr, the preferable mole ratio of Sr relative to the total amount of moles of elements other than Li and O is, for example, greater than or equal to 0.05 mol% and less than or equal to 0.3 mol%, or greater than or equal to 0.07 mol% and less than or equal to 0.15 mol%.

At least one of the first and second composite oxide particles preferably includes at least one selected from the group consisting of Ca and Sr as the element M. In this case, the effect of improving the thermal stability of the battery becomes more remarkable. Although at least one of the first and second composite oxide particles include Ca or Sr as the element M and may further include at least one selected from the group consisting of B, Ti, and Nb, Ca and Sr are particularly preferably included. At least one of the first and second composite oxide particles includes Ca at greater than or equal to 0.1 mol% and less than or equal to 0.5 mol% and Sr at greater than or equal to 0.05 mol% and less than or equal to 0.3 mol% relative to the total amount of moles of elements other than Li and O, for example.

At least one of the first and second composite oxide particles may further include at least one selected from the group consisting of W, Mo, and Zr. For example, at least one of the first and second composite oxide particles includes at least one selected from the group consisting of Ca and Sr and at least one selected from the group consisting of W, Mo, and Zr. When the composite oxide particles include at least one selected from the group consisting of W, Mo, and Zr, a sum of mole ratios thereof is preferably greater than or equal to 0.05 mol% and less than or equal to 1.5 mol%, and more preferably greater than or equal to 0.1 mol% and less than or equal to 1 mol% relative to the total amount of moles of elements other than Li and O.

Although both the first and second composite oxide particles may include the element M, when only one of them includes the element M, the first composite oxide particles preferably include the element M. The first composite oxide particles preferably include at least one selected from the group consisting of Ca and Sr as the element M, and may further include at least one selected from the group consisting of the other elements M (B, Ti, and Nb), W, Mo, and Zr. The first composite oxide particles particularly preferably include Ca and Sr.

The first and second composite oxide particles are, for example, a composite oxide represented by a general formula LiₓNiₐCo_{b}Mn_{c}M_{d}M2ₑM3_{f}O_{2-y}, wherein 0.95 ≤ x ≤ 1.05, 0.75 ≤ a ≤ 0.95, 0 ≤ b ≤ 0.15, 0 ≤ c ≤ 0.25, 0 ≤ d ≤ 0.015, 0 ≤ e ≤ 0.015, 0 ≤ f ≤ 0.03, 0 ≤ y < 0.05, a+b+c+d+e+f = 1, M2 represents at least one selected from the group consisting of W, Mo, and Zr, and M3 represents an element other than Li, Ni, Co, Mn, the element M, the element M2, and O). In the first composite oxide particles, the mole ratio (d) of the element M in the above general formula preferably satisfies 0 < d ≤ 0.015.

The first composite oxide particles are preferably secondary particles each formed by aggregation of many primary particles. The second composite oxide particles may be secondary particles each formed by aggregation of many primary particles, but are preferably single primary particles or secondary particles each formed by aggregation of greater than or equal to two and less than or equal to five primary particles. When the first composite oxide particles are the secondary particles each formed by aggregation of many (for example, greater than or equal to 100) primary particles and the second composite oxide particles are the single primary particles or secondary particles each formed by aggregation of greater than or equal to two and less than or equal to five primary particles, a thermal runaway temperature of the battery placed under a high-temperature environment rises, for example.

The first composite oxide particles are polycrystal particles constituted with, for example, aggregation of many primary particles having an average particle diameter of less than or equal to 0.3 µm. Each of primary particles to constitute one particle of the composite oxide is adhered each other with strength so as not to be disintegrated by applying a strong force during preparing the positive electrode mixture slurry or the like. The second composite oxide particles are also called, for example, non-aggregated particles or single particles, and are single-crystal primary particles having no particle boundary inside thereof. Note that the second composite oxide particles may include less than or equal to five primary particles. The composite oxide particles being the polycrystal particles or the single-crystal particles may be confirmed by analyzing an electron beam diffraction image with a transmission electron microscope (TEM), for example.

Ca and Sr are present on at least an interface between the primary particles inside the secondary particles of the composite oxide, and present on the surfaces at higher density than inside the primary particles, for example. Ca and Sr present on the surfaces of the primary particles may be confirmed by TEM-EDX and STEM-EDX. Ca and Sr are present in an evenly dispersed state on the interface between the primary particles, for example. The other elements M (B, Ti, and Nb), W, Mo, and Zr may be present on the interface between the primary particles inside the secondary particles of the composite oxide, similarly to Ca and Sr, or may form a solid solution together with another metal element such as Ni. An amount of the solid solution of the element may be determined by ICP-AES or energy dispersive X-ray spectrometry (EDS).

When the composite oxide particles are the secondary particles each formed by aggregation of many primary particles, an average particle diameter of the primary particles to constitute the secondary particles is preferably less than or equal to 0.3 µm, and more preferably greater than or equal to 0.02 µm and less than or equal to 0.2 µm. The particle diameter of the primary particles may be determined by photographing a cross section of the particle with a scanning electron microscope (SEM) and analyzing the SEM image. For example, the positive electrode or the composite oxide particles are embedded in a resin, the cross section is produced by cross-section polisher (CP) processing, and this cross section is photographed with the SEM. From the SEM image, 50 primary particles are randomly selected to observe the particle boundary, an area of each of the 50 primary particles is determined, and a diameter of a circle corresponding to the area is calculated to specify an average value thereof as the average particle diameter.

As noted above, in the first composite oxide particles, D50 is greater than 8 µm and less than or equal to 30 µm, and (D90-D10)/D50 is greater than or equal to 0.7 and less than or equal to 1.5. In the second composite oxide particles, D50 is greater than 1 µm and less than or equal to 6 µm, and D90-D10 is less than or equal to 6 µm. The positive electrode active material of the present embodiment includes large particles having broad particle size distribution and small particles having characteristic particle size distribution. Using the first and second composite oxide particles having the specific composition and particle size distribution as the positive electrode active material raises the thermal runaway temperature of the battery to yield excellent thermal stability.

The D50 means a particle diameter at which a cumulative frequency is 50% from a smaller particle diameter side in volume-based particle size distribution, and is commonly called a median diameter. The D10 means a particle diameter at which the cumulative frequency is 10% from the smaller particle diameter side in the volume-based particle size distribution, and the D90 means a particle diameter at which the cumulative frequency is 90% from the smaller particle diameter side in the volume-based particle size distribution. The value of (D90-D10)/D50 is used as an index indicating a width of the particle size distribution. In typical, a larger value thereof refers to broader particle size distribution, and a smaller value thereof refers to sharper particle size distribution.

The particle size distribution of the first and second composite oxide particles is measured by using a laser diffraction-type particle size distribution measuring device with water as a dispersion medium. Particle size distribution of composite oxide particles in Examples described later was measured by using MT3000II, manufactured by MicrotracBEL Corp.

The D50 of the first composite oxide particles is preferably greater than 8 µm and less than or equal to 25 µm, more preferably greater than 8 µm and less than or equal to 20 µm, and particularly preferably greater than 8 µm and less than or equal to 15 µm. When the D50 of the first composite oxide particles is within this range, the effect of improving the thermal stability of the battery becomes more remarkable. If the D50 is out of the range of greater than 8 µm and less than or equal to 30 µm, the effect of improving the thermal stability cannot be obtained. The D50 of the first composite oxide particles may be, for example, greater than or equal to 8.5 µm and less than or equal to 15 µm, or greater than or equal to 8.8 µm and less than or equal to 12.5 µm.

The (D90-D10)/D50 of the first composite oxide particles is preferably greater than or equal to 0.8 and less than or equal to 1.5, more preferably greater than or equal to 0.9 and less than or equal to 1.5, and particularly preferably greater than or equal to 1 and less than or equal to 1.5. When the (D90-D10)/D50 of the first composite oxide particles is within this range, the effect of improving the thermal stability of the battery becomes more remarkable. If the (D90-D10)/D50 is out of the range of greater than or equal to 0.8 and less than or equal to 1.5, the effect of improving the thermal stability cannot be obtained. The (D90-D10)/D50 of the first composite oxide particles may be, for example, greater than or equal to 1 and less than or equal to 1.4, or greater than or equal to 1.1 and less than or equal to 1.3.

The D50 of the second composite oxide particles is preferably greater than 1 µm and less than or equal to 5 µm, more preferably greater than 1 µm and less than or equal to 4.5 µm, and particularly preferably greater than 1 µm and less than or equal to 4 µm. When the D50 of the second composite oxide particles is within this range, the effect of improving the thermal stability of the battery becomes more remarkable. If the D50 is out of the range of greater than 1 µm and less than or equal to 6 µm, the effect of improving the thermal stability cannot be obtained. The D50 of the second composite oxide particles may be, for example, greater than or equal to 1 µm and less than or equal to 3.5 µm, or greater than or equal to 1.5 µm and less than or equal to 3 µm.

The D90-D10 of the second composite oxide particles is preferably greater than or equal to 0.5 µm and less than or equal to 5.5 µm, more preferably greater than or equal to 0.8 µm and less than or equal to 5 µm, and particularly preferably greater than or equal to 1 µm and less than or equal to 4.5 µm. When the D90-D10 of the second composite oxide particles is within this range, the effect of improving the thermal stability of the battery becomes more remarkable. If the D90-D10 is greater than 6 µm, the effect of improving the thermal stability cannot be obtained. The D90-D10 of the second composite oxide particles may be, for example, greater than or equal to 1 µm and less than or equal to 3.5 µm, or greater than or equal to 1.5 µm and less than or equal to 3 µm.

The volume-based particle size distribution of the positive electrode active material of the present embodiment includes: a first peak present within a particle diameter range of greater than 8 µm and less than or equal to 30 µm and a second peak present within a particle diameter range of greater than 1 µm and less than or equal to 6 µm. Although greater than or equal to three peaks may be present in the particle size distribution, the number of peaks in the particle size distribution is preferably substantially two. The above first and second peaks are present also in particle size distribution of the positive electrode active material obtained by determining an area of the composite oxide particles from the SEM image of the positive electrode cross section and calculating a diameter of a circle corresponding to the area.

In the volume-based particle size distribution of the positive electrode active material of the present embodiment, a maximum value of the first peak is preferably less than or equal to a maximum value of the second peak, and preferably less than the maximum value of the second peak. Also, the particle size distribution obtained from the SEM image of the positive electrode cross section satisfies the following: the maximum value of the first peak ≤ the maximum value of the second peak. When greater than or equal to three peaks are present in the particle size distribution, the maximum value of the second peak is preferably the largest. When the particle size distribution of the positive electrode active material is determined by analyzing the SEM image of the positive electrode cross section, it is preferable that particles having cracks and the like to have collapsed particle shape be excluded to evaluate the particle size distribution.

The positive electrode active material comprising the above constitution is manufactured via the following steps, for example.
(1) a step of preparing the first composite oxide particles, wherein a mole ratio of Ni relative to the total amount of moles of elements other than Li and O is greater than or equal to 50 mol%, D50 is greater than 8 µm and less than or equal to 30 µm, and (D90-D10)/D50 is greater than or equal to 0.7 and less than or equal to 1.5;
(2) a step of preparing the second composite oxide particles, wherein a mole ratio of Ni relative to the total amount of moles of elements other than Li and O is greater than or equal to 50 mol%, D50 is greater than 1 µm and less than or equal to 6 µm, and D90-D10 is less than or equal to 6 µm; and
(3) a step of mixing the first and second composite oxide particles.

The process for manufacturing the positive electrode active material may further include a step of washing the first and second composite oxide particles or a mixture thereof. In the washing step, a calcined product obtained in a step of calcining the composite oxide particles is washed with a solvent such as water and an alcohol to reduce an impurity such as LiOH, and the washed calcined product is dried by heating. The calcined product is crushed, classified, and the like as necessary to regulate D50 of the composite oxide particles to be within the target range. An example of a preferable drying temperature is greater than or equal to 150°C and less than or equal to 250°C, but the drying may be performed at a temperature of less than 100°C. The drying treatment may be performed under any condition in vacuo, under the atmospheric pressure, or under pressurizing. An atmosphere for the drying may be air, air from which oxygen, nitrogen, and carbon dioxide are removed, or a mixed gas thereof. An example of a time for the drying treatment is greater than or equal to 1 hour and less than or equal to 5 hours.

The first and second composite oxide particles may be synthesized by, for example, mixing and calcining: a composite oxide including at least Ni and preferably further including metal elements such as Co and Mn; a material including Li; and a material including the element M. The composite oxide including Ni and the like may be obtained by precipitating (coprecipitating) a composite hydroxide including Ni and the like, and thermally treating the composite hydroxide. The composite hydroxide may be synthesized by, for example, while stirring a solution of metal salts including Ni and the like, adding a solution of an alkali such as sodium hydroxide dropwise to adjust a pH on the alkaline side (for example, greater than or equal to 8.5 and less than or equal to 12.5).

A particle diameter of the composite hydroxide tends to be smaller at a higher pH during the synthesis. The particle diameter of the composite hydroxide may also be regulated by controlling an amount of the added solution of the metal salt, and a larger amount of the solution tends to yield a larger particle diameter, for example. The particle size distribution of the first and second composite oxide particles may be regulated by, for example, controlling the particle diameter of the composite hydroxide being the precursor. A temperature for the thermal treatment is not particularly limited, but within a range of greater than or equal to 250°C and less than or equal to 600°C, for example. The particle size distribution of the first and second composite oxide particles also changes depending on the element added during the synthesis of the composite hydroxide and the element added during the calcination, and may be regulated by controlling the type and amount of the element to be added.

An example of the material including Li includes Li₂CO₃, LiOH, Li₂O₂, Li₂O, LiNO₃, LiNO₂, Li₂SO₄, LiOH·H₂O, LiH, and LiF. The composite oxide including Ni and the like and the material including Li are preferably mixed at a ratio such that a mole ratio between: a total amount of elements in the oxide other than Li and O; and Li in the Li raw material is greater than or equal to 1:0.98 and less than or equal to 1:1.12, for example.

An example of the material including the element M includes Ca(OH)₂, CaHPO₄, Ca(H₂PO₄)₂, Ca₃(PO₄)₂, CaO, CaCO₃, CaSO₄, Ca(NO₃)_{2,} CaCl₂, CaAlO₄, Sr(OH)₂, Sr(OH)₂·8H₂O, SrO, SrCO₃, SrSO₄, and Sr(NO₃)₂. An example of the M2 raw material includes Nb₂O₅, Nb₂O₅·nH₂O, TiO₂, Ti(OH)₄, and B(OH)₃. A material including the element M2 may be further added. An example of the material including the element M2 includes WO₃, Li₂WO₄, ZrO₂, Zr(OH)₄, MoO₃, and Li₂MoO₄.

The calcining step of the mixture may include a multistage calcining step. The mixture is calcined under an oxygen atmosphere, and in this time, the oxygen concentration is set to be greater than or equal to 85%, for example. For example, when the polycrystal composite oxide particles are synthesized, the calcination is performed at a temperature of greater than or equal to 650°C and less than 800°C, and when the single-crystal composite oxide particles are synthesized, the calcination is performed at a temperature of greater than or equal to 800°C and less than or equal to 900°C, and then the calcination is performed at a temperature of greater than or equal to 650°C and less than 800°C.

The calcining step is performed by feeding the mixture into a calcining furnace. The calcining step may include a plurality of temperature-raising steps with temperature-raising rates different from each other. For example, it is acceptable that the temperature is raised from room temperature to a first calcining temperature (a first temperature-raising step) at a rate of greater than or equal to 1.0°C/min and less than or equal to 5.5°C/min, and the temperature is raised from the first calcining temperature to a second calcining temperature (the second temperature-raising step) at a rate of greater than or equal to 0.1°C/min and less than or equal to 3.5°C/min, which is lower than in the first temperature-raising step. The temperature may be held at the highest reaching temperature in the calcining step for a predetermined time (for example, greater than or equal to 1 hour and less than or equal to 10 hours).

Although the first and second composite oxide particles may be synthesized by a method described in Examples described later, the first composite oxide particles are synthesized at a calcining temperature lower than that in synthesizing the second composite oxide particles, for example. In a case of the second composite oxide particles (the single-crystal composite oxide particles), the calcination is performed at high temperature for a long time in order to enhance the crystal growth. When the first composite oxide particles are synthesized, an element so as to inhibit the crystal growth may be added.

### [Negative Electrode]

The negative electrode 12 has a negative electrode core and a negative electrode mixture layer disposed on the negative electrode core. For the negative electrode core, a foil of a metal stable within a potential range of the negative electrode 12, such as copper, a copper alloy, stainless steel, nickel, and a nickel alloy, a film in which such a metal is disposed on a surface thereof, and the like may be used. The negative electrode mixture layer includes a negative electrode active material and a binder, and is preferably provided on both surfaces of the negative electrode core. The negative electrode 12 may be produced by, for example, applying a negative electrode mixture slurry including the negative electrode active material and the binder on the negative electrode core, and drying and subsequently compressing the coating film to form the negative electrode mixture layer on both the surfaces of the negative electrode core. As the negative electrode 12, metal lithium foil may also be used. Alternatively, the negative electrode 12 may be constituted of only the negative electrode core, and metal lithium may be precipitated on the core surface during charge of the battery.

The negative electrode active material is not particularly limited as long as it reversibly occludes and releases lithium ions, and a carbon material such as graphite is typically used. For the negative electrode active material, an element that forms an alloy with Li, such as Si and Sn, a material including such an element, and the like may be used. Among these, a silicon-containing material, which includes Si, is preferable. As the negative electrode active material, lithium titanate and the like, which have a higher potential of charge and discharge relative to metal lithium than the carbon material and the like, may also be used. The negative electrode active material may be used singly, or a plurality of types thereof may be used in combination.

The carbon material to function as the negative electrode active material is, for example, at least one selected from the group consisting of natural graphite, artificial graphite, soft carbon, and hard carbon. Among these, artificial graphite such as massive artificial graphite (MAG) and graphitized mesophase-carbon microbead (MCMB), natural graphite such as flake graphite, massive graphite, and amorphous graphite, or a mixture thereof is preferably used. Examples of the silicon-containing material to function as the negative electrode active material include a silicon alloy, a silicon compound, and a composite material including Si. A preferable silicon-containing material is of composite particles including an ion-conductive phase and a Si phase dispersed in the ion-conductive phase.

For the binder included in the negative electrode mixture layer, a fluororesin, an olefin resin, PAN, a polyimide, a polyamide, an acrylic resin, or the like may be used as in the case of the positive electrode 11, but polyvinyl acetate, styrene-butadiene rubber (SBR), and the like may also be used. Among these, SBR is preferably used. The binder may be used singly, or a plurality of types thereof may be used in combination. The negative electrode mixture layer preferably includes CMC or a salt thereof, polyacrylic acid (PAA) or a salt thereof, polyvinyl alcohol (PVA), or the like. These function as a thickener in the negative electrode mixture slurry. A content of the binder is not particularly limited, and, for example, greater than or equal to 0.1 mass% and less than or equal to 5 mass% relative to the mass of the negative electrode mixture layer. The negative electrode mixture layer may include a conductive agent such as CNT.

### [Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. On a surface of the separator 13, a highly heat-resistant resin layer such as an aramid resin may be formed.

On an interface between the separator 13 and at least one of the positive electrode 11 and the negative electrode 12, a filler layer including an inorganic filler may be formed. Examples of the inorganic filler include an oxide including a metal element such as Ti, Al, Si, and Mg, and a phosphoric acid compound. The filler layer may be formed by applying a slurry including the filler on the surface of the positive electrode 11, the negative electrode 12, or the separator 13.

### [Non-Aqueous Electrolyte]

The non-aqueous electrolyte has ion conductivity (for example, lithium-ion conductivity). The non-aqueous electrolyte may be a liquid electrolyte (an electrolyte liquid) or may be a solid electrolyte.

The electrolyte liquid includes, for example, a non-aqueous solvent and an electrolyte salt dissolved in the non-aqueous solvent. For the non-aqueous solvent, esters, ethers, nitriles such as acetonitrile, amides such as dimethylformamide, a mixed solvent of two or more thereof, or the like may be used, for example. The non-aqueous solvents may contain a halogen-substituted product in which the hydrogen atoms of these solvents are at least partially substituted with a halogen atom such as fluorine. Examples of the halogen-substituted product include fluorinated cyclic carbonates such as fluoroethylene carbonate (FEC), fluorinated chain carbonates, and fluorinated chain carboxylates such as methyl fluoropropionate (FMP).

Examples of the esters include cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as γ-butyrolactone (GBL) and γ-valerolactone (GVL); and chain carboxylates such as methyl acetate, ethyl acetate, propyl acetate, methyl propionate (MP), and ethyl propionate (EP).

Examples of the ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Example of the lithium salt include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, a lithium lower aliphatic carboxylate, LiCl, LiBr, LiI, a phosphate salt, a borate salt, and a imide salt. Examples of the phosphate salt include lithium difluorophosphate (LiPO₂F₂), lithium difluorobis(oxalato)phosphate (LiDFBOP), and lithium tetrafluoro(oxalato)phosphate. Examples of the borate salt include lithium bis(oxalato)borate (LiBOB) and lithium difluoro(oxalato)borate (LiDFOB). As the imide salt include lithium bisfluorosulfonylimide (LiN(FSO₂)₂), lithium bistrifluoromethanesulfonylimide (LiN(CF₃SO₂)₂), lithium trifluoromethanesulfonylnonafluorobutanesulfonylimide (LiN(CF₃SO₂)(C₄F₉SO₂)), lithium bispentafluoroethanesulfonylimide (LiN(C₂F₅SO₂)₂), and the like are used. Among these, LiPF₆ is preferably used from the viewpoints of ion conductivity, electrochemical stability, and the like. A concentration of the lithium salt may be, for example, less than or equal to 4 mol, may be less than or equal to 3 mol, is preferably less than or equal to 1.8 mol, and more preferably greater than or equal to 0.8 mol and less than or equal to 1.8 mol per litter of the non-aqueous solvent.

The non-aqueous electrolyte may include an additive. Examples of the additive include an unsaturated carbonate ester, an acid anhydride, a phenol compound, a benzene compound, a nitrile compound, an isocyanate compound, a sultone compound, a sulfuric acid compound, a borate ester compound, a phosphate ester compound, and a phosphite ester compound.

Examples of the unsaturated cyclic carbonate ester include vinylene carbonate, 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinylethylene carbonate, and divinylethylene carbonate. The unsaturated cyclic carbonate ester may be used singly, or may be used in combination of two or more. In the unsaturated cyclic carbonate ester, hydrogen atoms may be partially substituted with a fluorine atom. The acid anhydride may be an anhydride in which a plurality of carboxylic acid molecules are intermolecularly condensed, but is preferably an acid anhydride of a polycarboxylic acid. Examples of the acid anhydride of a polycarboxylic acid include succinic anhydride, maleic anhydride, and phthalic anhydride.

Examples of the phenol compound include phenol and hydroxytoluene. Examples of the benzene compound include fluorobenzene, hexafluorobenzene, and cyclohexylbenzene (CHB).

Examples of the nitrile compound include adiponitrile, pimelonitrile, propionitrile, and succinonitrile. Examples of the isocyanate compound include methyl isocyanate (MIC), diphenylmethane diisocyanate (MDI), hexamethylene diisocyanate (HDI), toluene diisocyanate (TDI), isophorone diisocyanate (IPDI), and bisisocyanatemethylcyclohexane (BIMCH). Examples of the sultone compound include propanesultone and propenesultone. Examples of the sulfuric acid compound include ethylene sulfate, ethylene sulfite, dimethyl sulfate, and lithium fluorosulfate. Examples of the borate ester compound include trimethyl borate and tris(trimethylsilyl) borate. Examples of the phosphate ester compound include trimethyl phosphate and tris(trimethylsilyl) phosphate. Examples of the phosphite ester compound include trimethyl phosphite and tris(trimethylsilyl) phosphite.

As the solid electrolyte, a solid or gel polymer electrolyte, an inorganic solid electrolyte, and the like may be used, for example. For the inorganic solid electrolyte, a known material for an all-solid lithium-ion secondary battery or the like (for example, an oxide-type solid electrolyte, a sulfide-type solid electrolyte, halogen-type solid electrolyte, and the like) may be used. The polymer electrolyte includes a lithium salt and a matrix polymer, or includes the non-aqueous solvent, the lithium salt, and a matrix polymer, for example. As the matrix polymer, a polymer material that absorbs the non-aqueous solvent to gel is used, for example. Examples of the polymer material include a fluororesin, an acrylic resin, and a polyether resin.

### EXAMPLES

Hereinafter, the present disclosure will be further described with Examples, but the present disclosure is not limited to these Examples.

### <Example 1>

### [Synthesis of First Lithium-Transition Metal Composite Oxide Particles A1]

A composite hydroxide including Ni, Co, and Mn was synthesized by a coprecipitation method, and thermally treated at 400°C to obtain a composite oxide represented by Ni_{0.9}Co_{0.05}Mn_{0.05}O. This composite oxide, lithium hydroxide, calcium hydroxide, and strontium hydroxide were mixed at a predetermined mass ratio. This mixture was calcined at 750°C for 3 hours. This calcined product was crushed, washed with water, and then dried in vacuo at 170°C to obtain first lithium-transition metal composite oxide particles A1.

The obtained composite oxide particles A1 were analyzed by ICP-AES to consequently find that a content of Ni was 89.7 mol%, a content of Co was 4.98 mol%, a content of Mn was 4.98 mol%, a content of Ca was 0.25 mol%, and a content of Sr was 0.1 mol% relative to a total amount of the elements other than Li and O. Since the contents of Ca and Sr were small relative to the contents of Ni, Co, and Mn, a mole ratio between Ni, Co, and Mn is described as 90:5:5 in Table 1 (the same applies to the following Examples, Comparative Examples, and Reference Examples).

In volume-based particle size distribution of the composite oxide particles A1 measured by using MT3000II, manufactured by MicrotracBEL Corp., with water as a dispersion medium, D50 was 9.5 µm, D90 was 15.4 µm, D10 was 4.0 µm, and (D90-D10)/D50 was 1.2. It was confirmed that the composite oxide particles A1 were secondary particles each formed by aggregation of primary particles from an SEM image, and it was confirmed that Ca and Sr were present on the surfaces of the primary particles by TEM-EDX.

### [Synthesis of Second Lithium-Transition Metal Composite Oxide Particles B1]

A composite hydroxide including Ni, Co, and Mn was synthesized by a coprecipitation method, and thermally treated at 400°C to obtain a composite oxide represented by Ni_{0.8}Co_{0.1}Mn_{0.1}O (D50 = 2 µm). This composite oxide and lithium hydroxide were mixed at a predetermined mass ratio, the mixture was calcined at 850°C for 6 hours, and then further calcined at 750°C for 3 hours. This calcined product was crushed, washed with water, and then dried in vacuo at 170°C to obtain second lithium-transition metal composite oxide particles B1.

In volume-based particle size distribution of the composite oxide particles B1 measured by using MT3000II, manufactured by MicrotracBEL Corp., with water as a dispersion medium, D50 was 2.2 µm, D90 was 4.1 µm, D10 was 0.9 µm, and D90-D10 was 3.2 µm. The composite oxide particles B1 were single-crystal particles constituted of substantially single primary particles.

### [Production of Positive Electrode]

As a positive electrode active material, a mixture of the first and second lithium-transition metal composite oxides at a mass ratio of 75:25 was used. This positive electrode active material, acetylene black, and polyvinylidene fluoride (PVdF) were mixed at a solid content mass ratio of 98:1:1, and N-methyl-2-pyrrolidone (NMP) was used as a dispersion medium to prepare a positive electrode mixture slurry. This positive electrode mixture slurry was applied on both surfaces of a positive electrode core composed of aluminum foil, the coating film was dried, then the coating film was rolled by using a roller, and cut to a predetermined electrode size to obtain a positive electrode in which a positive electrode mixture layer was formed on both the surfaces of the positive electrode core. On a part of the positive electrode, an exposed portion where the surface of the positive electrode core was exposed was provided.

In particle size distribution of the positive electrode active material, a first peak near 9.5 µm and a second peak near 1.2 µm were present, and the maximum value of the first peak was smaller than the maximum value of the second peak. Similarly, in the following Examples, particle size distribution of the positive electrode active material included a first peak present within a particle diameter range of greater than 8 µm and less than or equal to 30 µm and a second peak present within a particle diameter range of greater than 1 µm and less than or equal to 6 µm, and the maximum value of the first peak was smaller than the maximum value of the second peak. Note that the same results were obtained from particle size distribution determined by analyzing an SEM image of the positive electrode cross section.

### [Production of Negative Electrode]

As a negative electrode active material, a mixture of a silicon-containing material represented by SiOₓ (0 < x ≤ 2) and natural graphite at a mass ratio of 3:97 was used. On particle surfaces of the silicon-containing material, a carbon coating was formed. The negative electrode active material, sodium carboxymethylcellulose (CMC-Na), and a dispersion of styrene-butadiene rubber (SBR) were mixed at a solid content mass ratio of 100:1:1, and water was used as a dispersion medium to prepare a negative electrode mixture slurry. This negative electrode mixture slurry was applied on both surfaces of a negative electrode core composed of copper foil, the coating film was dried, then the coating film was rolled by using a roller, and cut to a predetermined electrode size to obtain a negative electrode in which a negative electrode mixture layer was formed on both the surfaces of the negative electrode core. On a part of the negative electrode, an exposed portion where the surface of the negative electrode core was exposed was provided.

### [Preparation of Non-Aqueous Electrolyte Liquid]

Into a mixed solvent in which ethylene carbonate (EC), methyl ethyl carbonate (MEC), and dimethyl carbonate (DMC) were mixed at a volume ratio (25°C) of 3:3:4, LiPF₆ was dissolved at a concentration of 1.2 mol/L to prepare a non-aqueous electrolyte liquid.

### [Production of Test Cell (Non-Aqueous Electrolyte Secondary Battery)]

An aluminum lead was attached to the exposed portion of the positive electrode, a nickel lead was attached to the exposed portion of the negative electrode, and the positive electrode and the negative electrode were spirally wound via a separator made of polyolefin to produce a wound electrode assembly. This electrode assembly was housed in a bottomed cylindrical housing can, the above non-aqueous electrolyte liquid was injected, and then an opening portion of the housing can was capped with a sealing assembly to obtain a test cell.

### <Example 2>

### [Synthesis of Second Lithium-Transition Metal Composite Oxide Particles B2]

Composite oxide particles B2 were synthesized in the same manner as the method for synthesizing the composite oxide particles B1 in Example 1 except that D50 of the composite oxide represented by Ni_{0.8}Co_{0.1}Mn_{0.1}O was changed to 4 µm.

A positive electrode and a non-aqueous electrolyte secondary battery were produced in the same manner as in Example 1 except that the composite oxide particles B2 were used as the positive electrode active material instead of the composite oxide particles B1.

### <Comparative Example 1>

A positive electrode and a non-aqueous electrolyte secondary battery were produced in the same manner as in Example 1 except that the second lithium-transition metal composite oxide particles were not used as the positive electrode active material.

### <Comparative Example 2>

### [Synthesis of Second Lithium-Transition Metal Composite Oxide Particles B3]

Composite oxide particles B2 were synthesized in the same manner as the method for synthesizing the composite oxide particles B1 in Example 1 except that D50 of the composite oxide represented by Ni_{0.8}Co_{0.1}Mn_{0.1}O was changed to 7.2 µm.

A positive electrode and a non-aqueous electrolyte secondary battery were produced in the same manner as in Example 1 except that the composite oxide particles B3 were used as the positive electrode active material instead of the composite oxide particles B1.

### <Comparative Example 3>

### [Synthesis of First Lithium-Transition Metal Composite Oxide Particles A2]

Composite oxide particles A2 were synthesized in the same manner as the method for synthesizing the composite oxide particles A1 in Example 1 except that a composite oxide represented by Ni_{0.8}Co_{0.1}Mn_{0.1}O that had narrower particle size distribution than that in Example 1 was used.

A positive electrode and a non-aqueous electrolyte secondary battery were produced in the same manner as in Example 1 except that the composite oxide particles A2 were used as the positive electrode active material instead of the composite oxide particles A1.

As for each of the test cells of Examples and Comparative Examples, a thermal runaway temperature was evaluated by the following method. A lower thermal runaway temperature refers to higher thermal stability of the test cell. Table 1 shows the evaluation results together with the composition and a physical property of the positive electrode active material. Similarly, as for the following Examples, Comparative Examples, and Reference Examples, the thermal runaway temperature of the test cells was evaluated, and shown in Tables 2 to 4 together with the composition and the physical property of the positive electrode active material.

### [Evaluation of Thermal Runaway Temperature]

By using a runway reaction measurement device (an accelerated rate calorimeter: ARC), manufactured by Thermal Hazard Technology Limited, a thermal runaway temperature of the test cell was measured under the following conditions.
Measurement starting temperature: 100°C
Holding temperature: 20 minutes
Heat generation detecting temperature: 0.02°C/min
Temperature-raising width: 5°C
Battery voltage: 4.2 V, charged state

The test cell in a charged state was placed in an electric furnace and heated, and the temperature was held at a set temperature for 20 minutes to measure a temperature on the cell surface. When rise in temperature that was greater than or equal to the heat generation detecting temperature was not detected, the temperature was raised to a next set temperature, which was higher by 5°C, to perform the measurement again. A battery temperature when the self-heat-generation rate of the battery reached 10°C/min was defined as the thermal runaway temperature.

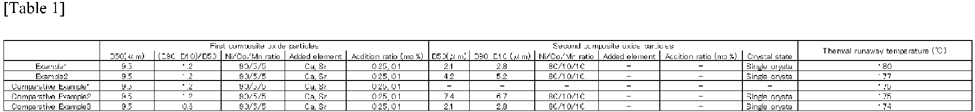

As shown in Table 1, it was understood that both the test cells of Examples 1 and 2 exhibited a high thermal runaway temperature compared with the test cells of Comparative Examples 1 to 3, and had excellent thermal stability. When the positive electrode active material did not include the second composite oxide particles (Comparative Example 1), when D50 and D90-D10 of the second composite oxide particles were greater than 6 µm (Comparative Example 2), and when (D90-D10)/D50 of the first composite oxide particles was less than 0.7 (Comparative Example 3), the thermal runaway temperature was lower than that in the case of using the positive electrode active material of Examples 1 and 2.

### <Example 3>

### [Synthesis of Second Lithium-Transition Metal Composite Oxide Particles B4]

A composite hydroxide including Ni, Co, and Mn was synthesized by a coprecipitation method, and thermally treated at 400°C to obtain a composite oxide represented by Ni_{0.8}Co_{0.1}Mn_{0.1}O (D50 = 2 µm). This composite oxide, lithium hydroxide, calcium hydroxide, strontium hydroxide, and zirconium oxide were mixed at a predetermined mass ratio, and the mixture was calcined at 750°C for 3 hours. This calcined product was crushed, washed with water, and then dried in vacuo at 170°C to obtain second lithium-transition metal composite oxide particles B4. From the SEM image, it was confirmed that the composite oxide particles B4 were secondary particles each formed by aggregation of many (greater than or equal to 100) primary particles.

A positive electrode and a non-aqueous electrolyte secondary battery were produced in the same manner as in Example 1 except that the composite oxide particles B4 were used as the positive electrode active material instead of the composite oxide particles B1.

### <Comparative Example 4>

A positive electrode and a non-aqueous electrolyte secondary battery were produced in the same manner as in Example 3 except that the composite oxide particles A2 were used as the positive electrode active material instead of the composite oxide particles A1.

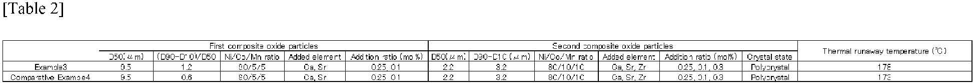

As shown in Table 2, the test cell using the positive electrode active material of Example 3 exhibited a high thermal runaway temperature and had excellent thermal stability compared with the test cell of Comparative Example 4 using the positive electrode active material including the first composite oxide particles having (D90-D10)/D50 of less than 0.7.

### <Example 4>

### [Synthesis of First Lithium-Transition Metal Composite Oxide Particles A3]

Composite oxide particles A3 were synthesized in the same manner as the method for synthesizing the composite oxide particles A1 in Example 1 except that a composite oxide represented by Ni_{0.8}Co_{0.1}Mn_{0.1}O was used instead of the composite oxide represented by Ni_{0.9}Co_{0.05}Mn_{0.05}O.

### [Synthesis of Second Lithium-Transition Metal Composite Oxide Particles B5]

The composite oxide particles B5 were synthesized in the same manner as for the composite oxide particles B1 in Example 1.

A positive electrode and a non-aqueous electrolyte secondary battery were produced in the same manner as in Example 1 except that, as the positive electrode active material: the composite oxide particles A3 were used instead of the composite oxide particles A1; and the composite oxide particles B5 were used instead of the composite oxide particles B1.

### <Comparative Example 5>

A positive electrode and a non-aqueous electrolyte secondary battery were produced in the same manner as in Example 4 except that the second lithium-transition metal composite oxide particles were not used as the positive electrode active material.

### <Example 5>

### [Synthesis of First Lithium-Transition Metal Composite Oxide Particles A4]

Composite oxide particles A3 were synthesized in the same manner as the method for synthesizing the composite oxide particles A1 in Example 1 except that a composite oxide represented by Ni_{0.5}Co_{0.2}Mn_{0.3}O was used instead of the composite oxide represented by Ni_{0.9}Co_{0.05}Mn_{0.05}O.

A positive electrode and a non-aqueous electrolyte secondary battery were produced in the same manner as in Example 4 except that the composite oxide particles A4 were used as the positive electrode active material instead of the composite oxide particles A1.

### <Comparative Example 6>

A positive electrode and a non-aqueous electrolyte secondary battery were produced in the same manner as in Example 5 except that the second lithium-transition metal composite oxide particles were not used as the positive electrode active material.

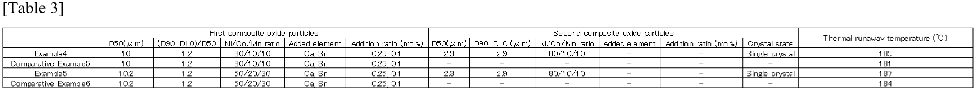

As shown in Table 3, the test cells using the positive electrode active material of Examples 4 and 5 exhibited a high thermal runaway temperature and had excellent thermal stability compared with the test cells of corresponding Comparative Examples 5 and 6 using the positive electrode active material not including the second composite oxide particles.

### <Example 6>

### [Synthesis of First Lithium-Transition Metal Composite Oxide Particles A5]

The composite oxide particles A5 were synthesized in the same manner as for the composite oxide particles A1 in Example 1.

A positive electrode and a non-aqueous electrolyte secondary battery were produced in the same manner as in Example 4 except that the composite oxide particles A5 were used as the positive electrode active material instead of the composite oxide particles A3.

### <Comparative Example 7>

A positive electrode and a non-aqueous electrolyte secondary battery were produced in the same manner as in Example 6 except that the second lithium-transition metal composite oxide particles were not used as the positive electrode active material.

### <Example 7>

### [Synthesis of First Lithium-Transition Metal Composite Oxide Particles A6]

First lithium-transition metal composite oxide particles A6 were obtained in the same manner as in Example 6 except that the addition amount of calcium hydroxide was reduced to set the content of Ca to 0.07 mol%.

A positive electrode and a non-aqueous electrolyte secondary battery were produced in the same manner as in Example 6 except that the composite oxide particles A6 were used as the positive electrode active material instead of the composite oxide particles A5.

### <Comparative Example 8>

A positive electrode and a non-aqueous electrolyte secondary battery were produced in the same manner as in Example 7 except that the second lithium-transition metal composite oxide particles were not used as the positive electrode active material.

### <Example 8>

### [Synthesis of First Lithium-Transition Metal Composite Oxide Particles A7]

First lithium-transition metal composite oxide particles A7 were obtained in the same manner as in Example 6 except that the addition amount of strontium hydroxide was reduced to set the content of Sr to 0.03 mol%.

A positive electrode and a non-aqueous electrolyte secondary battery were produced in the same manner as in Example 6 except that the composite oxide particles A7 were used as the positive electrode active material instead of the composite oxide particles A5.

### <Comparative Example 9>

A positive electrode and a non-aqueous electrolyte secondary battery were produced in the same manner as in Example 8 except that the second lithium-transition metal composite oxide particles were not used as the positive electrode active material.

### <Example 9>

### [Synthesis of First Lithium-Transition Metal Composite Oxide Particles A8]

First lithium-transition metal composite oxide particles A8 were obtained in the same manner as in Example 6 except that strontium hydroxide was not added.

A positive electrode and a non-aqueous electrolyte secondary battery were produced in the same manner as in Example 6 except that the composite oxide particles A8 were used as the positive electrode active material instead of the composite oxide particles A5.

### <Comparative Example 10>

A positive electrode and a non-aqueous electrolyte secondary battery were produced in the same manner as in Example 9 except that the second lithium-transition metal composite oxide particles were not used as the positive electrode active material.

### <Example 10>

### [Synthesis of First Lithium-Transition Metal Composite Oxide Particles A9]

First lithium-transition metal composite oxide particles A9 were obtained in the same manner as in Example 6 except that calcium hydroxide was not added.

A positive electrode and a non-aqueous electrolyte secondary battery were produced in the same manner as in Example 6 except that the composite oxide particles A9 were used as the positive electrode active material instead of the composite oxide particles A5.

### <Comparative Example 11>

A positive electrode and a non-aqueous electrolyte secondary battery were produced in the same manner as in Example 10 except that the second lithium-transition metal composite oxide particles were not used as the positive electrode active material.

### <Example 11>

### [Synthesis of First Lithium-Transition Metal Composite Oxide Particles A10]

First lithium-transition metal composite oxide particles A10 were obtained in the same manner as in Example 6 except that boron oxide (content of B: 0.5 mol%) was added instead of strontium hydroxide.

A positive electrode and a non-aqueous electrolyte secondary battery were produced in the same manner as in Example 6 except that the composite oxide particles A10 were used as the positive electrode active material instead of the composite oxide particles A5.

### <Comparative Example 12>

A positive electrode and a non-aqueous electrolyte secondary battery were produced in the same manner as in Example 11 except that the second lithium-transition metal composite oxide particles were not used as the positive electrode active material.

### <Example 12>

### [Synthesis of First Lithium-Transition Metal Composite Oxide Particles A11]

First lithium-transition metal composite oxide particles A11 were obtained in the same manner as in Example 6 except that titanium oxide (content of Ti: 0.5 mol%) was added instead of strontium hydroxide.

A positive electrode and a non-aqueous electrolyte secondary battery were produced in the same manner as in Example 6 except that the composite oxide particles A11 were used as the positive electrode active material instead of the composite oxide particles A5.

### <Comparative Example 13>

A positive electrode and a non-aqueous electrolyte secondary battery were produced in the same manner as in Example 12 except that the second lithium-transition metal composite oxide particles were not used as the positive electrode active material.

### <Example 13>

### [Synthesis of First Lithium-Transition Metal Composite Oxide Particles A12]

First lithium-transition metal composite oxide particles A12 were obtained in the same manner as in Example 6 except that niobium oxide (content of Nb: 0.5 mol%) was added instead of strontium hydroxide.

A positive electrode and a non-aqueous electrolyte secondary battery were produced in the same manner as in Example 6 except that the composite oxide particles A12 were used as the positive electrode active material instead of the composite oxide particles A5.

### <Comparative Example 14>

A positive electrode and a non-aqueous electrolyte secondary battery were produced in the same manner as in Example 13 except that the second lithium-transition metal composite oxide particles were not used as the positive electrode active material.

### <Example 14>

### [Synthesis of First Lithium-Transition Metal Composite Oxide Particles A13]

First lithium-transition metal composite oxide particles A13 were obtained in the same manner as in Example 6 except that tungsten oxide (content of W: 0.5 mol%) was added instead of strontium hydroxide.

A positive electrode and a non-aqueous electrolyte secondary battery were produced in the same manner as in Example 6 except that the composite oxide particles A13 were used as the positive electrode active material instead of the composite oxide particles A5.

### <Comparative Example 15>

A positive electrode and a non-aqueous electrolyte secondary battery were produced in the same manner as in Example 14 except that the second lithium-transition metal composite oxide particles were not used as the positive electrode active material.

### <Example 15>

### [Synthesis of First Lithium-Transition Metal Composite Oxide Particles A14]

First lithium-transition metal composite oxide particles A14 were obtained in the same manner as in Example 6 except that molybdenum oxide (content of Mo: 0.5 mol%) was added instead of strontium hydroxide.

A positive electrode and a non-aqueous electrolyte secondary battery were produced in the same manner as in Example 6 except that the composite oxide particles A14 were used as the positive electrode active material instead of the composite oxide particles A5.

### <Comparative Example 16>

A positive electrode and a non-aqueous electrolyte secondary battery were produced in the same manner as in Example 15 except that the second lithium-transition metal composite oxide particles were not used as the positive electrode active material.

### <Example 16>

### [Synthesis of First Lithium-Transition Metal Composite Oxide Particles A15]

First lithium-transition metal composite oxide particles A15 were obtained in the same manner as in Example 6 except that zirconium oxide (content of Zr: 0.3 mol%) was added instead of strontium hydroxide.

A positive electrode and a non-aqueous electrolyte secondary battery were produced in the same manner as in Example 6 except that the composite oxide particles A15 were used as the positive electrode active material instead of the composite oxide particles A5.

### <Comparative Example 17>

A positive electrode and a non-aqueous electrolyte secondary battery were produced in the same manner as in Example 16 except that the second lithium-transition metal composite oxide particles were not used as the positive electrode active material.

### <Example 17>

### [Synthesis of First Lithium-Transition Metal Composite Oxide Particles A16]

First lithium-transition metal composite oxide particles A16 were obtained in the same manner as in Example 6 except that boron oxide (content of B: 0.5 mol%) was added instead of calcium hydroxide and strontium hydroxide.

A positive electrode and a non-aqueous electrolyte secondary battery were produced in the same manner as in Example 6 except that the composite oxide particles A16 were used as the positive electrode active material instead of the composite oxide particles A5.

### <Comparative Example 18>

A positive electrode and a non-aqueous electrolyte secondary battery were produced in the same manner as in Example 17 except that the second lithium-transition metal composite oxide particles were not used as the positive electrode active material.

### <Example 18>

### [Synthesis of First Lithium-Transition Metal Composite Oxide Particles A17]

First lithium-transition metal composite oxide particles A17 were obtained in the same manner as in Example 6 except that titanium oxide (content of B: 0.5 mol%) was added instead of calcium hydroxide and strontium hydroxide.

A positive electrode and a non-aqueous electrolyte secondary battery were produced in the same manner as in Example 6 except that the composite oxide particles A17 were used as the positive electrode active material instead of the composite oxide particles A5.

### <Comparative Example 19>

A positive electrode and a non-aqueous electrolyte secondary battery were produced in the same manner as in Example 18 except that the second lithium-transition metal composite oxide particles were not used as the positive electrode active material.

### <Example 19>

### [Synthesis of First Lithium-Transition Metal Composite Oxide Particles A18]

First lithium-transition metal composite oxide particles A18 were obtained in the same manner as in Example 6 except that niobium oxide (content of Nb: 0.5 mol%) was added instead of calcium hydroxide and strontium hydroxide.

A positive electrode and a non-aqueous electrolyte secondary battery were produced in the same manner as in Example 6 except that the composite oxide particles A18 were used as the positive electrode active material instead of the composite oxide particles A5.

### <Comparative Example 20>

A positive electrode and a non-aqueous electrolyte secondary battery were produced in the same manner as in Example 19 except that the second lithium-transition metal composite oxide particles were not used as the positive electrode active material.

### <Reference Example 1>

### [Synthesis of First Lithium-Transition Metal Composite Oxide Particles X1]

First lithium-transition metal composite oxide particles X1 were obtained in the same manner as in Example 6 except that aluminum hydroxide (content of Al: 0.5 mol%) was added instead of calcium hydroxide and strontium hydroxide.

A positive electrode and a non-aqueous electrolyte secondary battery were produced in the same manner as in Example 6 except that the composite oxide particles X1 were used as the positive electrode active material instead of the composite oxide particles A5.

### <Reference Example 2>

A positive electrode and a non-aqueous electrolyte secondary battery were produced in the same manner as in Reference Example 1 except that the second lithium-transition metal composite oxide particles were not used as the positive electrode active material.

### <Reference Example 3>

### [Synthesis of First Lithium-Transition Metal Composite Oxide Particles X2]

First lithium-transition metal composite oxide particles X2 were obtained in the same manner as in Example 6 except that calcium hydroxide and strontium hydroxide were not added.

A positive electrode and a non-aqueous electrolyte secondary battery were produced in the same manner as in Example 6 except that the composite oxide particles X2 were used as the positive electrode active material instead of the composite oxide particles A5.

### <Reference Example 4>

A positive electrode and a non-aqueous electrolyte secondary battery were produced in the same manner as in Reference Example 3 except that the second lithium-transition metal composite oxide particles were not used as the positive electrode active material.

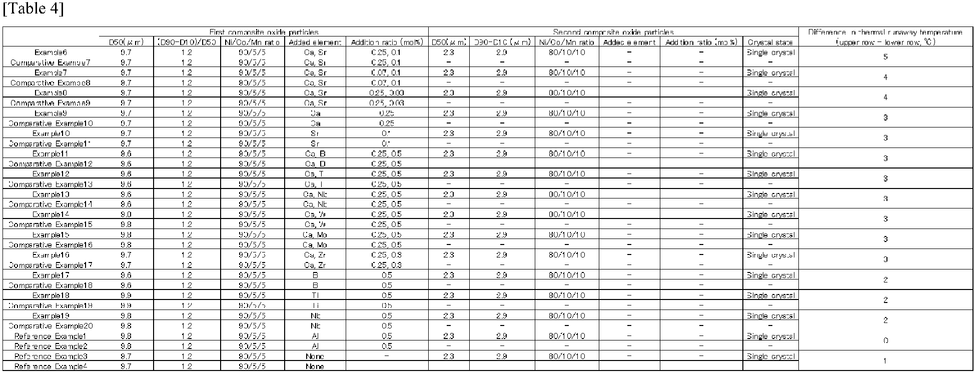

As shown in Table 4, all the test cells of Examples exhibited a high thermal runaway temperature and had excellent thermal stability compared with the test cells of corresponding Comparative Examples. Among these, when at least one of Ca and Sr was added as the element M (Examples 6 to 16), specifically when both Ca and Sr were added (Examples 6 to 8), the effect of improving the thermal stability was remarkable. As obvious from Reference Examples, even when the particle size distribution of the two types of the composite oxide particles satisfied the requirements same as in the positive electrode active material in Examples, the effect of improving the thermal stability was not obtained if the element M was absent.

The present disclosure will be further described with the following embodiments.

Constitution 1: A positive electrode active material for a non-aqueous electrolyte secondary battery, comprising: first lithium-transition metal composite oxide particles, wherein a mole ratio (a) of Ni relative to a total amount of moles of elements other than Li and O is greater than or equal to 50 mol%, a volume-based particle diameter at 50%, D50, is greater than 8 µm and less than or equal to 30 µm, and (a volume-based particle diameter at 90%, D90, - a volume-based particle diameter at 10%, D10)/D50 is greater than or equal to 0.7 and less than or equal to 1.5; and second lithium-transition metal composite oxide particles, wherein a mole ratio of Ni relative to a total amount of moles of elements other than Li and O is greater than or equal to 50 mol%, D50 is greater than 1 µm and less than or equal to 6 µm, and D90-D10 is less than or equal to 6 µm, wherein at least one of the first and second lithium-transition metal composite oxide particles includes at least one selected from the group consisting of Ca, Sr, B, Ti, and Nb.

Constitution 2: The positive electrode active material for a non-aqueous electrolyte secondary battery according to Constitution 1, wherein the first and second lithium-transition metal composite oxide particles have the mole ratio of Ni relative to the total amount of moles of elements other than Li and O of greater than or equal to 75 mol%.

Constitution 3: The positive electrode active material for a non-aqueous electrolyte secondary battery according to Constitution 1 or 2, wherein at least one of the first and second lithium-transition metal composite oxide particles includes Ca and Sr.

Constitution 4: The positive electrode active material for a non-aqueous electrolyte secondary battery according to Constitution 3, wherein at least one of the first and second lithium-transition metal composite oxide particles includes Ca at greater than or equal to 0.1 mol% and less than or equal to 0.5 mol% and Sr at greater than or equal to 0.05 mol% and less than or equal to 0.3 mol% relative to the total amount of moles of elements other than Li and O.

Constitution 5: The positive electrode active material for a non-aqueous electrolyte secondary battery according to any one of Constitutions 1 to 4, wherein at least one of the first and second lithium-transition metal composite oxide particles further includes at least one selected from the group consisting of W, Mo, and Zr.

Constitution 6: The positive electrode active material for a non-aqueous electrolyte secondary battery according to any one of Constitutions 1 to 5, wherein the second lithium-transition metal composite oxide particles are single primary particles or secondary particles each formed by aggregation of greater than or equal to two and less than or equal to five primary particles.

Constitution 7: The positive electrode active material for a non-aqueous electrolyte secondary battery according to any one of Constitutions 1 to 6, wherein volume-based particle size distribution includes a first peak present within a particle diameter range of greater than 8 µm and less than or equal to 30 µm and a second peak present within a particle diameter range of greater than 1 µm and less than or equal to 6 µm.

Constitution 8: The positive electrode active material for a non-aqueous electrolyte secondary battery according to Constitution 7, wherein a maximum value of the first peak is less than or equal to a maximum value of the second peak.

Constitution 9: A non-aqueous electrolyte secondary battery, comprising: a positive electrode including the positive electrode active material according to any one of Constitutions 1 to 8; a negative electrode; and a non-aqueous electrolyte.

Constitution 10: A method for manufacturing a positive electrode active material for a non-aqueous electrolyte secondary battery, the method including: a step of preparing first lithium-transition metal composite oxide particles, wherein a mole ratio of Ni relative to a total amount of moles of elements other than Li and O is greater than or equal to 50 mol%, a volume-based particle diameter at 50%, D50, is greater than 8 µm and less than or equal to 30 µm, and (a volume-based particle diameter at 90%, D90, - a volume-based particle diameter at 10%, D10)/D50 is greater than or equal to 0.7 and less than or equal to 1.5; a step of preparing second lithium-transition metal composite oxide particles, wherein a mole ratio of Ni relative to a total amount of moles of elements other than Li and O is greater than or equal to 50 mol%, D50 is greater than 1 µm and less than or equal to 6 µm, and D90-D10 is less than or equal to 6 µm; and a step of mixing the first and second lithium-transition metal composite oxide particles.

Constitution 11: The method for manufacturing a positive electrode active material for a non-aqueous electrolyte secondary battery according to Constitution 10, further including a step of washing the first and second lithium-transition metal composite oxide particles or a mixture thereof.

### REFERENCE SIGNS LIST

10 Non-aqueous electrolyte secondary battery, 11 Positive electrode, 12 Negative electrode, 13 Separator, 14 Electrode assembly, 16 Housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket

## Claims

1. A positive electrode active material for a non-aqueous electrolyte secondary battery, comprising:
first lithium-transition metal composite oxide particles, wherein a mole ratio of Ni relative to a total amount of moles of elements other than Li and O is greater than or equal to 50 mol%, a volume-based particle diameter at 50%, D50, is greater than 8 µm and less than or equal to 30 µm, and (a volume-based particle diameter at 90%, D90, - a volume-based particle diameter at 10%, D10)/D50 is greater than or equal to 0.7 and less than or equal to 1.5; and
second lithium-transition metal composite oxide particles, wherein a mole ratio of Ni relative to a total amount of moles of elements other than Li and O is greater than or equal to 50 mol%, D50 is greater than 1 µm and less than or equal to 6 µm, and D90-D10 is less than or equal to 6 µm,
wherein at least one of the first and second lithium-transition metal composite oxide particles includes at least one selected from the group consisting of Ca, Sr, B, Ti, and Nb.

2. The positive electrode active material for a non-aqueous electrolyte secondary battery according to claim 1, wherein the first and second lithium-transition metal composite oxide particles have the mole ratio of Ni relative to the total amount of moles of elements other than Li and O of greater than or equal to 75 mol%.

3. The positive electrode active material for a non-aqueous electrolyte secondary battery according to claim 1, wherein at least one of the first and second lithium-transition metal composite oxide particles includes Ca and Sr.

4. The positive electrode active material for a non-aqueous electrolyte secondary battery according to claim 3, wherein at least one of the first and second lithium-transition metal composite oxide particles includes Ca at greater than or equal to 0.1 mol% and less than or equal to 0.5 mol% and Sr at greater than or equal to 0.05 mol% and less than or equal to 0.3 mol% relative to the total amount of moles of elements other than Li and O.

5. The positive electrode active material for a non-aqueous electrolyte secondary battery according to claim 1, wherein at least one of the first and second lithium-transition metal composite oxide particles further includes at least one selected from the group consisting of W, Mo, and Zr.

6. The positive electrode active material for a non-aqueous electrolyte secondary battery according to claim 1, wherein the second lithium-transition metal composite oxide particles are single primary particles or secondary particles each formed by aggregation of greater than or equal to two and less than or equal to five primary particles.

7. The positive electrode active material for a non-aqueous electrolyte secondary battery according to claim 1, wherein volume-based particle size distribution includes a first peak present within a particle diameter range of greater than 8 µm and less than or equal to 30 µm and a second peak present within a particle diameter range of greater than 1 µm and less than or equal to 6 µm.

8. The positive electrode active material for a non-aqueous electrolyte secondary battery according to claim 7, wherein a maximum value of the first peak is less than or equal to a maximum value of the second peak.

9. A non-aqueous electrolyte secondary battery, comprising:
a positive electrode including the positive electrode active material according to any one of claims 1 to 8;
a negative electrode; and
a non-aqueous electrolyte.

10. A method for manufacturing a positive electrode active material for a non-aqueous electrolyte secondary battery, the method including:
a step of preparing first lithium-transition metal composite oxide particles, wherein a mole ratio of Ni relative to a total amount of moles of elements other than Li and O is greater than or equal to 50 mol%, a volume-based particle diameter at 50%, D50, is greater than 8 µm and less than or equal to 30 µm, and (a volume-based particle diameter at 90%, D90, - a volume-based particle diameter at 10%, D10)/D50 is greater than or equal to 0.7 and less than or equal to 1.5;
a step of preparing second lithium-transition metal composite oxide particles, wherein a mole ratio of Ni relative to a total amount of moles of elements other than Li and O is greater than or equal to 50 mol%, D50 is greater than 1 µm and less than or equal to 6 µm, and D90-D10 is less than or equal to 6 µm; and
a step of mixing the first and second lithium-transition metal composite oxide particles.

11. The method for manufacturing a positive electrode active material for a non-aqueous electrolyte secondary battery according to claim 10, further including a step of washing the first and second lithium-transition metal composite oxide particles or a mixture thereof.
